# EUROPÄISCHE PATENTSCHRIFT

(11) **EP 3 931 883 B1**
(45) Veröffentlichungstag und Bekanntmachung des Hinweises auf die Patenterteilung: **29.05.2024**
(21) Anmeldenummer: 20704795.2
(22) Anmeldetag: 04.02.2020
(51) Int. Cl.: H02G 3/00, H02G 15/00, H01M 50/172

(54) **ANORDNUNG EINER LEITUNG AN EINEM GEHÄUSETEIL FÜR EIN KRAFTFAHRZEUG**
ARRANGEMENT OF A LEAD ON A HOUSING PART FOR A MOTOR VEHICLE
AGENCEMENT D'UNE LIGNE ÉLECTRIQUE SUR UNE PARTIE DE BOÎTIER POUR UN VÉHICULE À MOTEUR

(30) Priorität: 26.02.2019 DE 102019001338
(43) Veröffentlichungstag der Anmeldung: 05.01.2022
(73) Patentinhaber: Mercedes-Benz Group AG, 70372 Stuttgart (DE)
(72) Erfinder: SCHOELLKOPF, Bernd, 73066 Uhingen (DE)
(74) Vertreter: Novagraaf Group
(86) Internationale Anmeldenummer: PCT/EP2020/052670
(87) Internationale Veröffentlichungsnummer: WO 2020/173668

(56) Entgegenhaltungen:
- EP-A1- 2 042 786
- EP-B1- 2 432 043
- WO-A1-2011/000363
- DE-A1- 10 338 664
- DE-A1- 10 356 763
- DE-A1-102016 114 453
- Dr. Jürgen Engbring: "Der Weg zum optimalen HV-Bordnetz", , 1. Februar 2012 (2012-02-01), XP055161535, Gefunden im Internet: URL:http://www.leoni-electromobility.com/f ileadmin/bu/emo/fachartikel/120999_E-Mobil ity_Der-Weg-zum-optimalen-Bordnetz_final.p df [gefunden am 2015-01-13]

## Beschreibung

Die Erfindung betrifft eine Anordnung einer Leitung an einem Gehäuseteil für ein Kraftfahrzeug.

Die EP 2 432 043 B1 offenbart eine Anordnung, mit einem Dichtungsrahmen zur Verwendung in einer Batterie. Außerdem offenbart die DE 10 2016 114 453 A1 ein Gehäuse für eine elektrische Einrichtung.

Aufgabe der vorliegenden Erfindung ist es, eine Anordnung einer Leitung an einem Gehäuseteil für ein Kraftfahrzeug zu schaffen, sodass die Leitung auf besonders einfache und sichere Weise an dem Gehäuseteil fixiert werden kann.

Diese Aufgabe wird durch eine Anordnung mit den Merkmalen des Patentanspruchs 1 gelöst. Vorteilhafte Ausgestaltungen mit zweckmäßigen Weiterbildungen der Erfindung sind in den übrigen Ansprüchen angegeben.

Bei der erfindungsgemäßen Anordnung wenigstens einer zum Führen von elektrischem Strom beziehungsweise elektrischer Energie ausgebildet und auch als Kabel bezeichneten Leitung an einem Gehäuseteil für ein Kraftfahrzeug, insbesondere für einen Kraftwagen wie beispielsweise einen Personenkraftwagen, ist zumindest ein erster Längenbereich der Leitung in einer korrespondierenden Ausnehmung des Gehäuseteils aufgenommen. Dabei ist an dem Gehäuseteil eine aus einem Elastomer gebildete und somit auch als Elastomerdichtung oder Elastomerformdichtung bezeichnete Dichtung gehalten, mittels welcher das Gehäuseteil gegen ein korrespondierendes Gehäuseelement abdichtbar ist. Zumindest ein zweiter Längenbereich der Dichtung erstreckt sich über den in der Ausnehmung angeordneten und somit in der Ausnehmung oder entlang der Ausnehmung verlaufenden ersten Längenbereich, wodurch der erste Längenbereich formschlüssig in der Ausnehmung fixiert beziehungsweise gehalten ist.

Der zweite Längenbereich erstreckt sich beispielsweise schräg oder senkrecht zu dem ersten Längenbereich, sodass beispielsweise der zweite Längenbereich den ersten Längenbereich überquert beziehungsweise kreuzt. Dadurch ist der in der Ausnehmung angeordnete erste Längenbereich an dem zweiten Längenbereich abgestützt oder abstützbar, sodass der erste Längenbereich nicht aus der Ausnehmung herausfallen kann. Hierdurch ist der erste Längenbereich formschlüssig in der Ausnehmung fixiert und somit an dem Gehäuseteil gehalten.

Die Erfindung ermöglicht eine prozesssichere Fixierung der beispielsweise als Kabel oder Kabelkanal ausgebildeten Leitung durch einen mittels der Elastomerformdichtung bewirkbaren oder bewirkten Formschluss. Dies bedeutet, dass die vorigen und folgenden Ausführungen zur Leitung ohne weiteres auch auf einen Kabelkanal zum Führen wenigstens eines Kabels beziehungsweise wenigstens einer Leitung übertragen werden können und umgekehrt. Der Dichtung kommt erfindungsgemäß eine Doppelfunktion zu, sodass die Leitung mit einer nur geringen Teileanzahl und somit kosten- und gewichtsgünstig an dem Gehäuseteil fixiert werden kann. Eine erste Funktion der Dichtung besteht darin, das Gehäuseteil gegen das Gehäuseelement abzudichten. Eine zweite Funktion der Dichtung besteht darin, den ersten Längenbereich formschlüssig in der Ausnehmung zu fixieren. Insbesondere kann die Dichtung als Montagehilfe verwendet werden, um beispielsweise im Rahmen einer Montage mittels der Dichtung, insbesondere mittels des zweiten Längenbereichs, zu verhindern, dass der erste Längenbereich beziehungsweise die Leitung aus der Ausnehmung herausfällt. Im Rahmen der Montage wird das Gehäuseteil beispielsweise an dem Gehäuseelement montiert, insbesondere während die Dichtung und die Leitung an dem Gehäuseteil gehalten sind. Wird bei der Montage das Gehäuseteil relativ zu dem Gehäuseelement bewegt und dabei beispielsweise um wenigstens oder genau 180 Grad um eine Schwenkachse verschwenkt, so verhindert der zweite Längenbereich formschlüssig, dass der erste Längenbereich aus der Ausnehmung herausfällt. Dadurch ermöglicht die Dichtung eine besonders einfache und somit zeit- und kostengünstige Montage des Gehäuseteils an dem Gehäuseelement. Insbesondere ermöglicht die Erfindung, dass zusätzliche, separate Hilfsmittel wie beispielsweise Klebestreifen zum Fixieren des ersten Längenbereichs und der Ausnehmung vermieden werden können, da nun erfindungsgemäß die Fixierung der Leitung mittels der Dichtung erfolgt.

Die Erfindung geht davon aus, dass es grundsätzlich möglich ist, den ersten Längenbereich der Leitung mittels wenigstens eines oder mehrerer, zusätzlicher Klebestreifen in der Ausnehmung zu fixieren. Hierzu werden beispielsweise die Klebestreifen derart an das Gehäuseteil geklebt, dass die Klebestreifen über die Ausnehmung und somit über den in der Ausnehmung angeordneten ersten Längenbereich verlaufen. Werden die Klebestreifen beispielsweise nicht an das Gehäuseteil angeklebt, da sie beispielsweise von einer die Montage durchführenden Person vergessen werden, so wird die Dichtung nicht in der Ausnehmung fixiert und kann aus der Ausnehmung bei der Montage herausfallen. In der Folge muss die Montage unterbrochen und dann von Neuem begonnen werden. Die Erfindung ermöglicht demgegenüber eine besonders hohe Prozesssicherheit bei der Durchführung der Montage, da die Dichtung einerseits zum Abdichten des Gehäuseteils gegen das Gehäuseelement und andererseits zum Fixieren der Leitung in der Ausnehmung verwendet wird. Wird somit die Dichtung an dem Gehäuseteil montiert, so wird gleichzeitig die Möglichkeit geschaffen, um bei einer Verlegung der Leitung die Leitung mittels der zuvor an dem Gehäuseteil montierten Dichtung in der Ausnehmung zu fixieren. Der Dichtung kommt somit nicht nur eine Abdichtfunktion zum Abdichten des Gehäuseteils gegen das Gehäuseelement zu, sondern der Dichtung kommt darüber hinaus eine Montagefunktion zu, um die Leitung besonders einfach an dem Gehäuseteil zu montieren.

Erfindungsgemäß ist an dem zweiten Längenbereich wenigstens eine von dem zweiten Längenbereich abstehende Lasche vorgesehen, mittels welcher der zweite Längenbereich manuell von der Ausnehmung wegziehbar ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht einer erfindungsgemäßen Anordnung von Leitungen an einem Gehäuseteil für ein Kraftfahrzeug;
- Fig. 2: ausschnittsweise eine schematische und perspektivische Draufsicht des Gehäuseteils;
- Fig. 3: eine schematische Perspektivansicht des Gehäuseteils;
- Fig. 4: ausschnittsweise eine weitere schematische Perspektivansicht des Gehäuseteils; und
- Fig. 5: eine schematische Perspektivansicht eines zum Speichern von elektrischer Energie ausgebildeten und die Anordnung und somit das Gehäuseteil umfassenden Energiespeichers für das Kraftfahrzeug.

In den Fig. sind gleiche oder funktionsgleiche Elemente mit gleichen Bezugszeichen versehen.

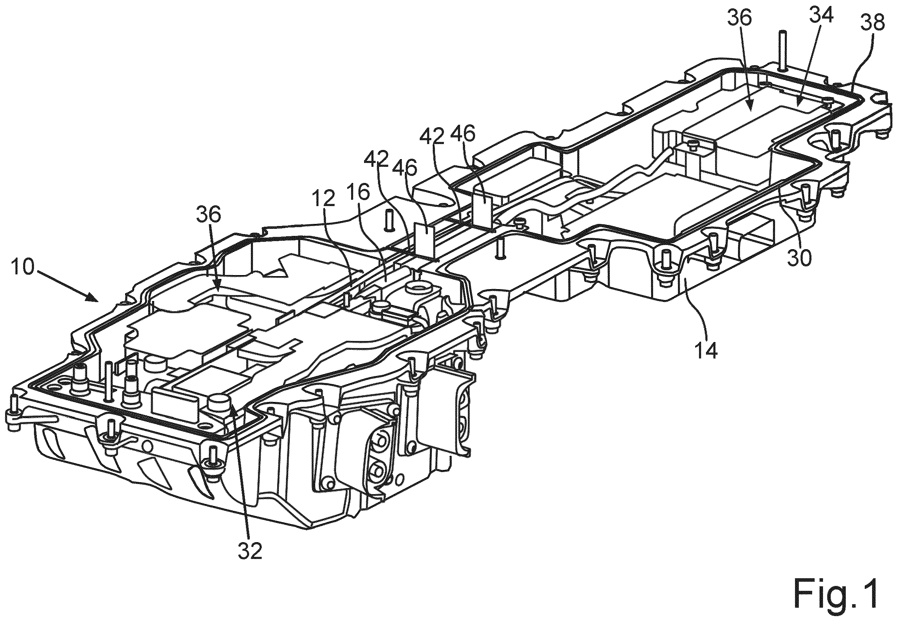

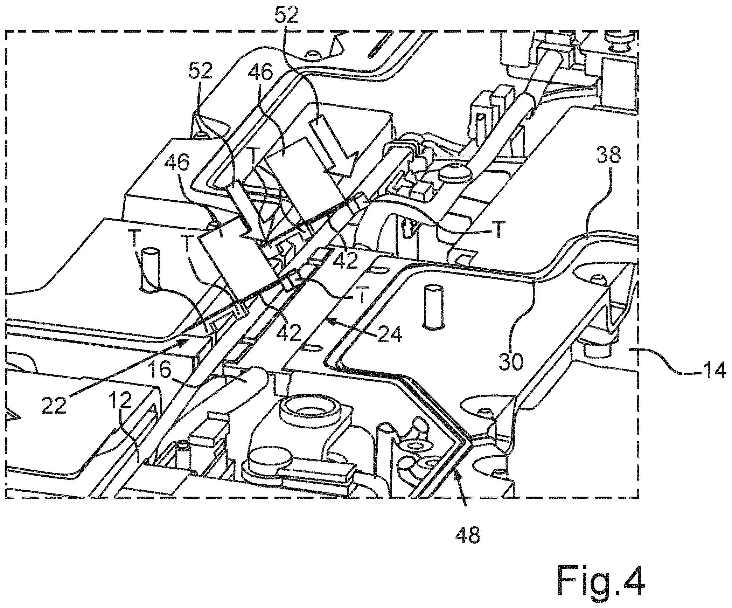

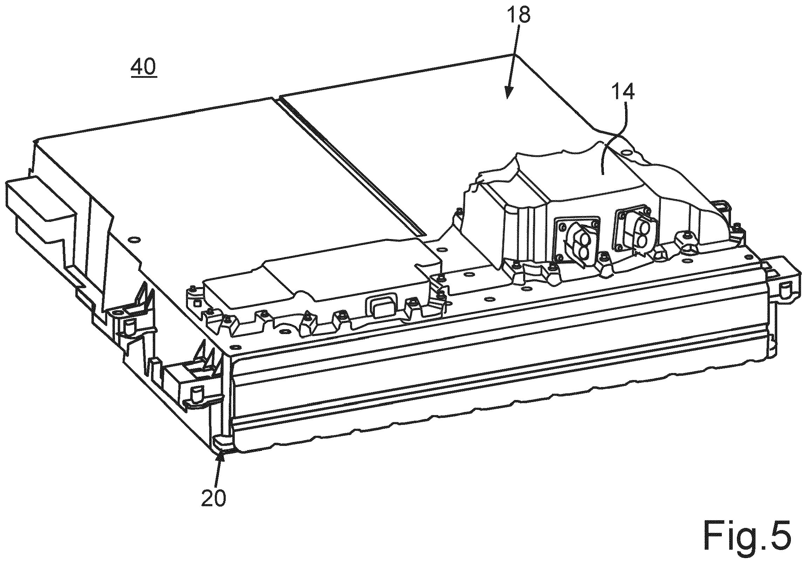

Fig. 1 zeigt in einer schematischen Perspektivansicht eine Anordnung 10 einer zum Führen von elektrischem Strom beziehungsweise elektrischer Energie ausgebildeten Leitung 12 an einem Gehäuseteil 14 für ein Kraftfahrzeug. Unter dem Merkmal, dass die Leitung 12 zum Führen von elektrischem Strom ausgebildet ist, ist zu verstehen, dass elektrischer Strom durch die auch als Kabel bezeichnete Leitung 12 fließen kann. Bei der Anordnung 10 ist außerdem wenigstens eine weitere, zum Führen von elektrischem Strom beziehungsweise elektrischer Energie ausgebildete und besonders aus Fig. 4 erkennbare Leitung 16 an dem Gehäuseteil 14 angeordnet. Das zuvor genannte Kraftfahrzeug ist beispielsweise als Kraftwagen, insbesondere als Personenkraftwagen, ausgebildet und umfasst in seinem vollständig hergestellten Zustand die Anordnung 10 und somit die Leitungen 12 und 16 und das Gehäuseteil 14. Das Kraftfahrzeug ist beispielsweise als Hybridfahrzeug oder aber als Elektrofahrzeug, insbesondere als batterieelektrisches Fahrzeug, ausgebildet und umfasst somit in seinem vollständig hergestellten Zustand wenigstens eine elektrische Maschine, mittels welcher das Kraftfahrzeug elektrisch angetrieben werden kann. Um das Kraftfahrzeug elektrisch anzutreiben, wird die elektrische Maschine mit elektrischer Energie beziehungsweise elektrischem Strom versorgt. Hierzu umfasst das Kraftfahrzeug in seinem vollständig hergestellten Zustand beispielsweise wenigstens oder genau einen in Fig. 5 in einer schematischen Perspektivansicht gezeigten Energiespeicher 18, mittels welchem elektrische Energie beziehungsweise elektrischer Strom gespeichert werden kann. Der Energiespeicher 18 ist eine Hochvolt-Komponente und weist demzufolge eine elektrische Spannung, insbesondere eine elektrische Betriebsspannung auf, welche mehr als 50 Volt und vorzugsweise mehrere hundert Volt beträgt. Hierdurch können besonders große elektrische Leitungen zum elektrischen Antreiben des Kraftfahrzeugs realisiert werden. Um somit die elektrische Maschine in ihrem Motorbetrieb zu betreiben, wird die elektrische Maschine mit im Energiespeicher 18 gespeicherter elektrischer Energie versorgt. Beispielsweise ist der Energiespeicher 18 als eine Hochvolt-Batterie (HV-Batterie) ausgebildet.

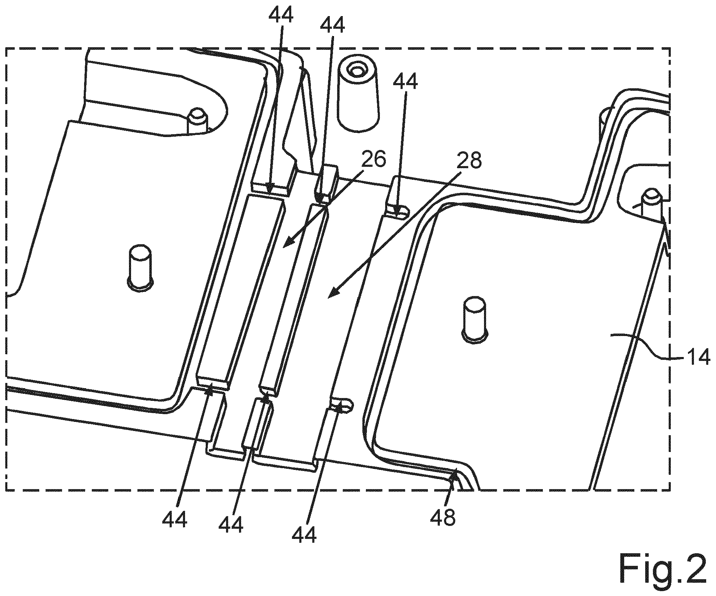

Der Energiespeicher 18 umfasst das Gehäuseteil 14 und ein damit korrespondierendes weiteres Gehäuseelement 20, in welchem beispielsweise mehrere, elektrisch miteinander verbundene Speicherzellen zum Speichern der elektrischen Energie angeordnet sind. Im vollständig hergestellten Zustand des Energiespeichers 18 ist das Gehäuseteil 14 mit dem Gehäuseelement 20 verbunden. Besonders gut aus Fig. 1, 3 und 4 ist erkennbar, dass bei der Anordnung 10 ein jeweiliger erster Längenbereich 22 beziehungsweise 24 der jeweiligen Leitung 12 beziehungsweise 16 in einer jeweiligen, korrespondierenden Ausnehmung 26 beziehungsweise 28 des Gehäuseteils 14 aufgenommen ist. Das Gehäuseteil 14 ist beispielsweise als Aluminium-Druckgussteil ausgebildet und begrenzt die Ausnehmung 26 und 28 direkt, sodass beispielsweise die in den Ausnehmung 26 und 28 aufgenommenen Längenbereiche 22 und 24 das Gehäuseteil 14 direkt berühren. Besonders gut aus Fig. 2 ist erkennbar, dass die Ausnehmungen 26 und 28 als Nuten des Gehäuseteils 14 ausgebildet sind, wobei die Ausnehmungen 26 und 28 jeweils eine Längserstreckungsrichtung aufweisen und somit länglich beziehungsweise geradlinig verlaufen. Dabei verlaufen die Längserstreckungsrichtungen der Ausnehmungen 26 und 28 beziehungsweise die Ausnehmungen 26 und 28 an sich parallel zueinander.

Des Weiteren ist bei der Anordnung 10 eine vorzugsweise einstückig ausgebildete und aus einem Elastomer gebildete Dichtung 30 gehalten, mittels welcher das Gehäuseteil 14 gegen das korrespondierende Gehäuseelement 20 abdichtbar beziehungsweise abgedichtet ist. Mit anderen Worten, im vollständig hergestellten Zustand des Energiespeichers 18 sind das Gehäuseteil 14 und das Gehäuseelement 20 miteinander verbunden, wobei das Gehäuseteil 14 mittels der Dichtung 30 gegen das Gehäuseelement 20 abgedichtet ist.

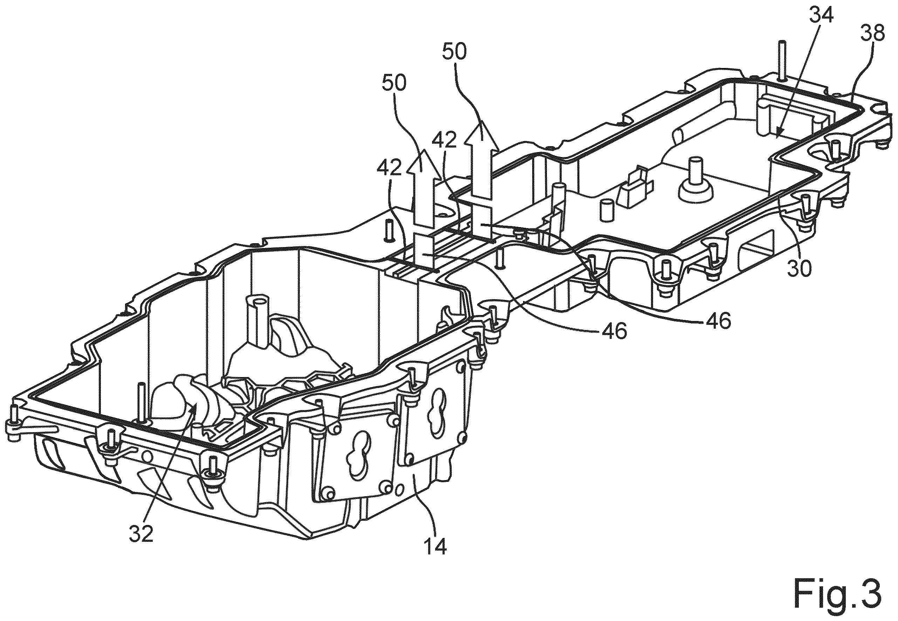

Besonders gut aus Fig. 1 und 3 ist erkennbar, dass das Gehäuseteil 14 Aufnahmebereiche 32 und 34 begrenzt, welche auch als Kompartimente bezeichnet werden. In den Aufnahmebereichen 32 und 34 sind jeweilige, elektrische oder elektronische Bauelemente 36 (Fig. 1), insbesondere des Energiespeichers 18, aufgenommen. Die Aufnahmebereiche 32 und 34 an sich sind zu dem Gehäuseelement 20 hin offen und werden dabei mittels des Gehäuseelements 20 beispielsweise verschlossen. Dabei weist die Dichtung 30 einen Längenbereich 38 auf, welcher sich vollständig um die Aufnahmebereiche 32 und 34 herum erstreckt. Dadurch können die Aufnahmebereiche 32 und 34 besonders gut gegen eine Umgebung 40 des Energiespeichers 18 abgedichtet werden, sodass beispielsweise vermieden werden kann, dass Feuchtigkeit in die Aufnahmebereiche 32 und 34 eindringen kann.

Aus Fig. 3 und 4 ist besonders gut erkennbar, dass von dem Längenbereich 38 der Dichtung 30 jeweilige zweite Längenbereiche 42 der Dichtung 30 abzweigen, wobei die Längenbereiche 42 schräg oder senkrecht zu dem Längenbereich 38 beziehungsweise zu zumindest einem Teil des Längenbereichs 38 verlaufen. Die Längenbereiche 42 sind dabei einstückig miteinander und einstückig mit dem Längenbereich 38 gebildet, sodass die Längenbereiche 42 Bestandteile der Dichtung 30 sind. Die Längenbereiche 42 erstrecken sich dabei über die Ausnehmungen 26 und 28 und über die in den Ausnehmungen 26 und 28 angeordneten Längenbereiche 22 und 24 der Leitungen 12 und 16 hinweg, wodurch die Längenbereiche 22 und 24 formschlüssig in den Ausnehmungen 26 und 28 gehalten und somit fixiert sind. Dabei sind jeweilige, in Längserstreckungsrichtung des jeweiligen Längenbereichs 42 aufeinanderfolgende und beispielsweise voneinander beabstandete Teile T des jeweiligen Längenbereichs 42 zumindest teilweise in jeweiligen weiteren Ausnehmungen 44 (Fig. 2) des Gehäuseteils 14 aufgenommen und dadurch an dem Gehäuseteil 14 gehalten beziehungsweise befestigt. Dabei ist die jeweilige Ausnehmung 26 beziehungsweise 28 mit den jeweiligen Ausnehmungen 44, insbesondere fluidisch, verbunden, sodass die Ausnehmungen 26 und 44 beziehungsweise 28 und 44, insbesondere unterbrechungsfrei beziehungsweise durchgängig, ineinander übergehen.

Außerdem ist an der Dichtung 30, an dem jeweiligen Längenbereich 42 wenigstens oder genau eine von dem jeweiligen Längenbereich 42, abstehende Lasche 46 vorgesehen, mittels welcher der jeweilige zweite Längenbereich 42 von der jeweiligen Ausnehmung 26 beziehungsweise 28 und somit von dem Gehäuseteil 14 manuell und somit beispielsweise von einer Person weggezogen werden kann. Die Laschen 46 sind dabei einstückig mit der Dichtung 30 ausgebildet, sodass die Dichtung 30 auch die Laschen 46 bildet.

Darüber hinaus weist das Gehäuseteil 14 eine teilweise aus Fig. 2 erkennbare und als Nut ausgebildete Aufnahme 48 auf, welche sich insbesondere vollständig umlaufend um die Aufnahmebereiche 32 und 34 herum erstreckt. Dabei ist der Längenbereich 38 der Dichtung 30 in der Aufnahme 48 aufgenommen und dadurch an dem Gehäuseteil 14 gehalten. Das Gehäuseteil 14 und somit die Ausnehmungen 26, 28 und 44 und die Aufnahme 48 sind durch Gießen, insbesondere durch Druckgießen, hergestellt. Nach einer Herstellung des Gehäuseteils 14 an sich wird beispielsweise die Dichtung 30 derart an dem hergestellten Gehäuseteil 14 montiert, dass der Längenbereich 38 in der Aufnahme 48 und die Längenbereiche 42 in den Ausnehmungen 44 angeordnet werden. Dies ist in Fig. 3 erkennbar. Mit anderen Worten zeigt Fig. 3 einen Zustand, in welchem die Leitungen 12 und 16 noch nicht an dem Gehäuseteil 14 montiert sind, wobei in dem genannten Zustand die Dichtung 30 derart an dem Gehäuseteil 14 montiert und somit gehalten ist, dass der Längenbereich 38 in der Aufnahme 48 und die Längenbereiche 42 in den Ausnehmungen 44 angeordnet ist beziehungsweise sind. In diesem Zustand wird beispielsweise das Gehäuseteil 14 mit der daran montierten Dichtung 30 an eine Arbeitsstation oder eine Montagewand angeliefert. Die Aufnahme 48, welche beispielsweise als Nut ausgebildet ist, ist beispielsweise in einem sogenannten dichtenden Bereich angeordnet, da die Aufnahme 48 und der Längenbereich 38 genutzt werden, um das Gehäuseteil 14 gegen das Gehäuseelement 20 abzudichten.

Ausgehend von dem in Fig. 3 gezeigten Zustand führt beispielsweise eine Person eine Montage durch, in deren Rahmen die Leitungen 12 und 16 an dem Gehäuseteil 14 montiert und dabei in den Ausnehmungen 26 und 28 verlegt werden. Hierzu ergreift oder umgreift beispielsweise die Person mit ihren Händen oder mit ihrer Hand die Laschen 46 und übt auf die Laschen 46 eine jeweilige, in Fig. 3 durch einen jeweiligen Pfeil 50 veranschaulichte Zugkraft aus. Hierdurch werden die Laschen 46 und über diese die Längenbereiche 42 von dem Gehäuseteil 14 weggezogen, insbesondere derart, dass die Teile T aus dem korrespondierenden Ausnehmungen 44 herausgezogen werden. Hierdurch werden die Längenbereiche 42 beispielsweise derart relativ zu dem Gehäuseteil 14 bewegt, dass die Längenbereiche 42 die Ausnehmungen 26 und 28 freigeben, das heißt dass die Ausnehmungen 26 und 28 nicht mehr von den Längenbereichen 42 überspannt werden. In der Folge können die Leitungen 12 und 16 derart verlegt und an dem Gehäuseteil 14 angeordnet werden, dass die Längenbereiche 22 und 24 in den Ausnehmungen 26 und 28 angeordnet werden. Mit anderen Worten werden die Leitungen 12 und 16 in die Ausnehmungen 26 und 28 eingelegt. Daraufhin werden - wie in Fig. 4 durch Pfeile 52 veranschaulicht ist - die Längenbereiche 42 von der Person insbesondere über die Laschen 46 derart relativ zu dem Gehäuseteil 14 bewegt, dass die Längenbereiche 42 sich wieder über die Ausnehmungen 26 und 28 erstrecken. Insbesondere werden die Teile T in den Ausnehmungen 44 angeordnet, indem die Teile T beispielsweise in die Ausnehmung 44 eingedrückt werden. Dann erstrecken sich die Längenbereiche 42 über die Ausnehmungen 26 und 28 und über die in den Ausnehmungen 26 und 28 angeordneten Längenbereiche 22 und 24.

Die Längenbereiche 42 weisen jeweils eine weitere Längserstreckungsrichtung auf, welche schräg oder vorliegend senkrecht zur jeweiligen Längserstreckungsrichtung der jeweiligen Ausnehmung 26 beziehungsweise 28 verläuft. Somit überqueren beziehungsweise kreuzen die Längenbereiche 42 die Ausnehmungen 26 und 28. Hierdurch werden die Längenbereiche 22 und 24 in eine von dem Gehäuseteil 14 wegweisende Richtung durch die Längenbereiche 42 überdeckt, wodurch die Längenbereiche 22 und 24 in die genannte Richtung an den Längenbereichen 42 abstützbar oder abgestützt sind. Dadurch sind die Längenbereiche 22 und 24 formschlüssig in den Ausnehmungen 26 und 28 fixiert und somit gehalten. Wird dann beispielsweise das Gehäuseteil 14 mit der daran gehaltenen Dichtung 30 und mit den daran gehaltenen Leitungen 12 und 16 beispielsweise um 180 Grad verschwenkt, derart, dass die zuvor genannte Richtung in vertikaler Richtung nach unten weist, so wird durch die die Ausnehmungen 26 und 28 und somit die Längenbereiche 22 und 24 überquerenden oder überspannenden Längenbereiche 42 verhindert, dass die Leitungen 12 und 16 aus den Ausnehmungen 26 und 28 in vertikaler Richtung nach unten herausfallen. In der Folge kann das Gehäuseteil 14 mit den daran gehaltenen Leitungen 12 und 16 besonders einfach in vertikaler Richtung von oben nach unten auf das Gehäuseelement 20 aufgesetzt und schließlich mit dem Gehäuseelement 20 verbunden werden, ohne dass hierbei die Leitungen 12 und 16 aus den Ausnehmungen 26 und 28 herausfallen.

Die von den Längenbereichen 42 abstehenden und somit überstehenden Laschen 46 können in eine beliebige Position gedrückt werden, da sie wie die Dichtung 30 beziehungsweise die Längenbereiche 38 und 42 aus dem zuvor genannten Elastomer gebildet und somit flexibel, das heißt elastisch verformbar beziehungsweise biegbar sind. Hierdurch kann vermieden werden, dass die Laschen 46 die Verbindung zwischen dem Gehäuseteil 14 und dem Gehäuseelement 20 beziehungsweise die gewünschte Abdichtung beeinträchtigen.

### Bezugszeichenliste

- 10: Anordnung
- 12: Leitung
- 14: Gehäuseteil
- 16: Leitung
- 18: Energiespeicher
- 20: Gehäuseelement
- 22: Längenbereich
- 24: Längenbereich
- 26: Ausnehmung
- 28: Ausnehmung
- 30: Dichtung
- 32: Aufnahmebereich
- 34: Aufnahmebereich
- 36: Bauelemente
- 38: Längenbereich
- 40: Umgebung
- 42: Längenbereich
- 44: Ausnehmung
- 46: Lasche
- 48: Aufnahme
- 50: Pfeil
- 52: Pfeil
- T: Teil

## Patentansprüche

1. Anordnung (10) wenigstens einer zum Führen von elektrischem Strom ausgebildeten Leitung (12) an einem Gehäuseteil (14) für ein Kraftfahrzeug, bei welcher zumindest ein erster Längenbereich (22) der Leitung (12) in einer Ausnehmung (26) des Gehäuseteils (14) aufgenommen ist, wobei an dem Gehäuseteil (14) eine aus einem Elastomer gebildete Dichtung (30) gehalten ist, mittels welcher das Gehäuseteil (14) gegen ein korrespondierendes Gehäuseelement (20) abdichtbar ist, und wobei sich zumindest ein zweiter Längenbereich (42) der Dichtung (30) über den ersten Längenbereich (22) erstreckt, wodurch der erste Längenbereich (22) formschlüssig in der Ausnehmung (26) fixiert ist,
**dadurch gekennzeichnet, dass**
an dem zweiten Längenbereich (42) wenigstens eine von dem zweiten Längenbereich (42) abstehende Lasche (46) vorgesehen ist, mittels welcher der zweite Längenbereich (42) manuell von der Ausnehmung (26) wegziehbar ist.

2. Anordnung (10) nach Anspruch 1,
**dadurch gekennzeichnet, dass**
zumindest ein Teil (T) des zweiten Längenbereiches (42) zumindest teilweise in wenigstens einer zweiten Ausnehmung (44) des Gehäuseteils (14) aufgenommen und dadurch an dem Gehäuseteil (14) gehalten ist.

3. Anordnung (10) nach Anspruch 2,
**dadurch gekennzeichnet, dass**
die Ausnehmungen (26, 44) an sich miteinander verbunden sind.

4. Anordnung (10) nach einem der vorhergehenden Ansprüche,
**dadurch gekennzeichnet, dass**
die Lasche (46) einstückig mit der Dichtung (30) ausgebildet ist

## Claims

1. Arrangement (10) of at least one line (12) designed for carrying electrical current on a housing part (14) for a motor vehicle, in which arrangement at least one first longitudinal region (22) of the line (12) is received in a recess (26) of the housing part (14), a seal (30) formed from an elastomer being held on the housing part (14), by means of which seal the housing part (14) is sealable against a corresponding housing element (20), and at least one second longitudinal region (42) of the seal (30) extending over the first longitudinal region (22), as a result of which the first longitudinal region (22) is fixed in a form-fitting manner in the recess (26),
**characterized in that**
at least one tab (46) protruding from the second longitudinal region (42) is provided on the second longitudinal region (42), by means of which tab the second longitudinal region (42) is retractable from the recess (26).

2. Arrangement (10) according to claim 1,
**characterized in that**
at least one part (T) of the second longitudinal region (42) is received at least partially in at least one second recess (44) of the housing part (14) and is thereby held on the housing part (14).

3. Arrangement (10) according to claim 2,
**characterized in that**
the recesses (26, 44) are connected to one another.

4. Arrangement (10) according to any of the preceding claims,
**characterized in that**
the tab (46) is formed integrally with the seal (30).

## Revendications

1. Agencement (10) d'au moins un câble (12) réalisé pour guider un courant électrique au niveau d'une partie de boîtier (14) pour un véhicule automobile, dans lequel au moins une première zone longitudinale (22) du câble (12) est reçue dans un évidement (26) de la partie de boîtier (14), un joint d'étanchéité (30) formé à partir d'un élastomère étant maintenu au niveau de la partie de boîtier (14), à l'aide duquel la partie de boîtier (14) peut être fermée hermétiquement contre un élément de boîtier (20) correspondant et au moins une seconde zone longitudinale (42) du joint d'étanchéité (30) s'étendant sur la première zone longitudinale (22), moyennant quoi la première zone longitudinale (22) est fixée par complémentarité de forme dans l'évidement (26),
**caractérisé en ce que**
au moins une patte (46) faisant saillie à partir de la seconde zone longitudinale (42) est prévue au niveau de la seconde zone longitudinale (42), à l'aide de laquelle patte la seconde zone longitudinale (42) peut être retirée manuellement de l'évidement (26).

2. Agencement (10) selon la revendication 1,
**caractérisé en ce que**
au moins une partie (T) de la seconde zone longitudinale (42) est reçue au moins partiellement dans au moins un second évidement (44) de la partie de boîtier (14) et ainsi maintenue au niveau de la partie de boîtier (14).

3. Agencement (10) selon la revendication 2,
**caractérisé en ce que**
les évidements (26, 44) sont reliés l'un à l'autre.

4. Agencement (10) selon l'une des revendications précédentes,
**caractérisé en ce que**
la patte (46) est réalisée d'une seule pièce avec le joint d'étanchéité (30).
